Europäisches Patentamt

European Patent Office

Office européen des brevets

(11) Publication number: **0 181 099**
**B1**

(12) **EUROPEAN PATENT SPECIFICATION**

(45) Date of publication of patent specification: **07.02.90**

(51) Int. Cl.⁵: **F 02 C 9/28**

(21) Application number: **85307388.0**

(22) Date of filing: **15.10.85**

(54) **Fuel control for a gas turbine engine.**

(30) Priority: **02.11.84 GB 8427756**
**08.03.85 GB 8506069**

(43) Date of publication of application:
**14.05.86 Bulletin 86/20**

(45) Publication of the grant of the patent:
**07.02.90 Bulletin 90/06**

(84) Designated Contracting States:
**DE FR GB IT**

(56) References cited:
**GB-A- 845 269**
**GB-A-1 002 816**
**US-A-2 779 422**
**US-A-4 229 937**
**US-A-4 473 999**
**US-A-4 578 945**

(73) Proprietor: **LUCAS INDUSTRIES public limited company**
**Great King Street**
**Birmingham, B19 2XF West Midlands (GB)**

(72) Inventor: **Smith, Trevor Stanely**
**3 Streather Road**
**Sutton Coldfield B75 6RB (GB)**

(74) Representative: **Cuddon, George Desmond et al**
**MARKS & CLERK Alpha Tower Suffolk Street Queensway**
**Birmingham B1 1TT (GB)**

Courier Press, Leamington Spa, England.

# Description

According to one of its aspects the invention relates to a metering device for liquid fuels and more specifically to a metering device which can be adjusted in accordance with the volumetric heat content of a fuel which is intended to be metered.

In particular the invention relates to a device for metering liquid fuel supply to a gas turbine engine. Since the calorific values (J/kg) of most gas turbine engine fuels are nearly the same, and fuel metering is carried out on a volumetric basis, the volumetric heat content ($J/m^3$) of any fuel varies approximately with its density ($kg/m^3$). It is therefore convenient to adjust fuel metering on the basis of the density of the fuel to be used. It has been proposed, for example in UK patent 1,002,816, to make a density adjustment of fuel metered to a gas turbine engine by means of governor weights which rotate in a fuel filled chamber and whose density is such that they are sensitive to the fuel density. Movement of these governors modifies the size of a metering orifice for the fuel. Such an arrangement requires the metering device to incorporate rotating parts of the type which are commonly present in a purely hydro mechanical fuel control system, wherein the engine speed term is included by means of such governors. More recent types of gas turbine engine fuel control are responsive to electrical control signals whose value corresponds to desired fuel flow, and do not include rotating parts of the above kind.

It is one object of the invention to provide a metering device in which fuel flow may be adjusted in accordance with its volumetric heat content, without the use of continuously rotating parts.

According to the invention there is provided a device for metering liquid fuel to a gas turbine engine, comprising a housing having inlet and outlet ports, a control member movable in response to a servo pressure, for regulating flow through one of said ports, means for regulating said servo pressure in accordance with the magnitude of an electrical control signal, said housing including a sleeve which is axially movable to vary the position of said one port in accordance with the density of said fuel, said sleeve threadedly engaging a part which is rotatable relative to said housing but which is restrained against axial movement relative thereto.

An embodiment of the invention will now be described by way of example only and with reference to the accompanying drawings in which:

Figure 1 is a diagram of a fuel control system for a gas turbine engine,

Figures 2 and 3 show details of parts of the system of Figure 1,

Figure 4 shows in more detail and to an enlarged scale a metering device forming part of Figure 1.

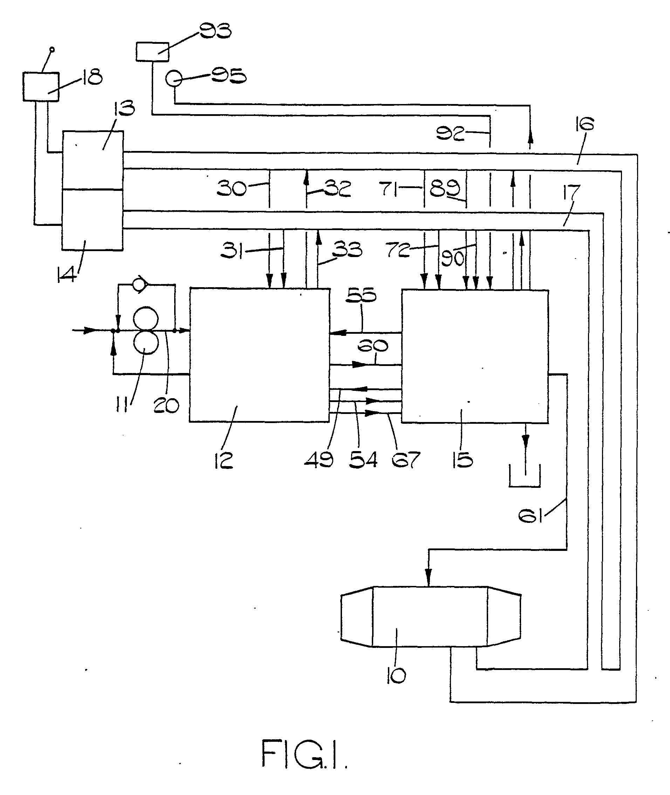

As shown in Figure 1 a gas turbine engine 10 is supplied with fuel from a positive displacement pump 11, fuel flow being regulated by a variable metering arrangement 12 which is under control of duplicated digital computers 13, 14. A limiting valve and shut-off valve arrangement 15 is provided in the fuel flow path between the metering arrangement 12 and the engine 10. The arrangement 15 is also under control of the computers 13 and 14. The computers 13, 14 are responsive to signals from an engine power selector device 18 and also to sensed conditions of the engine 10. The computers 13, 14 communicate with the engine 10 and the arrangements 12, 15 by way of respective data highways 16, 17.

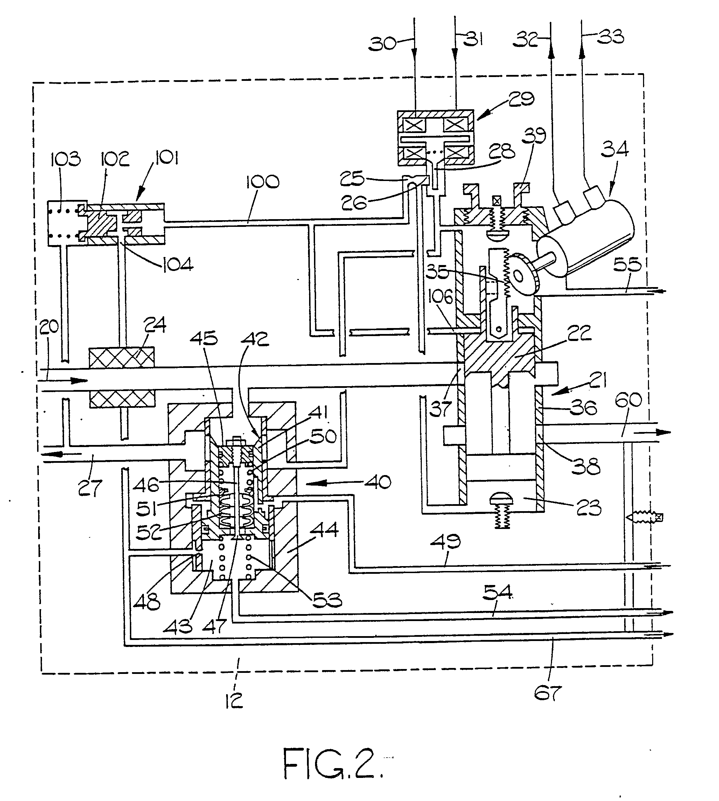

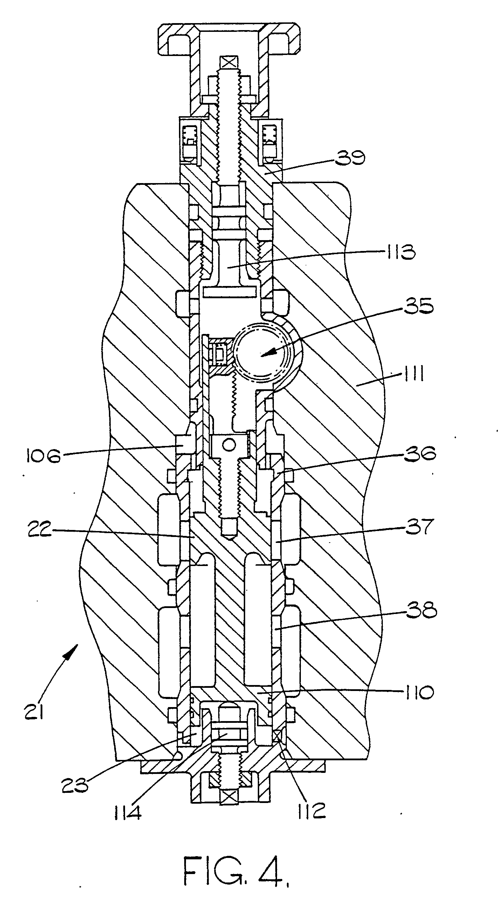

As shown in Figure 2 the metering arrangement 12 receives fuel from the pump 11 on a line 20. A metering valve 21, shown in more detail in Figure 4, receives fuel on the line 20 and includes a control member 22 which is responsive to a servo pressure in a chamber 23. A filter unit 24, a flow restrictor 25 and a valve 26 are arranged in series between the line 20 and a low pressure return line 27. Flow through the valve 26, and hence the pressure in the chamber 23, is responsive to the position of a control element 28 energisable by a double-coil torque motor 29. The coils of the torque motor 29 are responsive to signals on lines 30, 31 from the respective computers 13, 14. Position signals from the control member 22 are supplied to the computers 13, 14 through respective lines 32, 33 from a double synchro resolver 34 which co-acts with the member 22 through a rack and pinion arrangement 35. The control member 22 is slidable in a housing sleeve 36 which is provided with an inlet port 37 and an outlet port 38 and which threadedly engages an adjusting plug 39. The plug 39 is adjustably rotatable but is restrained against axial movement. The sleeve 36 may thereby be set to a desired axial position.

The arrangement 12 also includes a valve 40 which is operable to spill fuel from the inlet of the metering valve 21 to the return line 27. The valve 40 has a control element 41 which is slidable in a bore 42 to control flow between the lines 20, 27. The control element 41 is responsive to a servo pressure in a chamber 43 which is defined between a housing 44 and one end of the control element 41. A piston 45 is slidable within the control element 41 and includes a stem 46 which extends through the end of the control element 51 and defines in conjunction with that end a valve 47 for regulating servo pressure in the chamber 43. The valve 47 is in series with a flow restrictor 48 between the filter 24 and a line 49 which communicates with the fuel flow path downstream of the metering valve 21. The piston 45 is thus responsive to a difference between the pressures upstream and downstream of the metering valve 21 and is biased against movement in response to this pressure difference by a spring 50 which is supported by means of a collar 51 on a stack 52 of bi-metal discs which are responsive to fuel temperature. A further spring 53 acts to shut the valve 40 in the absence of a pressure in the line 20. The chamber 43 communicates through a line 54 with a further valve (later to be described) in the arrangement 15 which is operable to connect the line 54 to the low pressure return line 27 by way of passage 55.

An increase in the pressure difference across the metering valve 21 causes the piston 45 to move downwardly, opening the valve 47 and reducing the servo pressure in the chamber 43. The control element 41 then moves downwardly to increase spill flow until the aforesaid pressure difference returns to its original value. Connection of the chamber 43 to low pressure through the lines 54, 55 causes the valve 40 to become fully open and to spill effectively all the fuel from the line 20 to the return line 27.

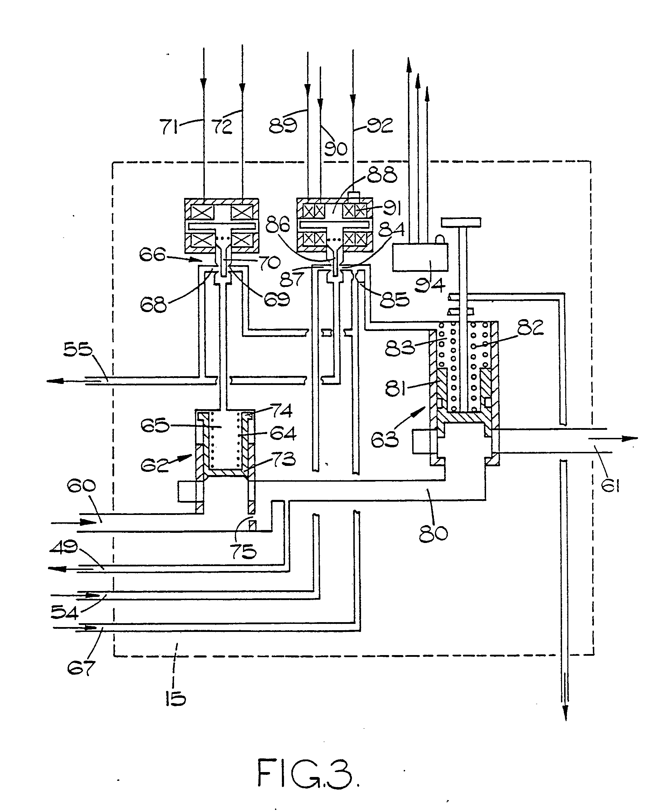

Fuel passes from the metering valve 21 through a passage 60 to the arrangement 15. As shown in Figure 3 the passage 60 communicates with an outlet passage 61 to the engine 10 by way of a flow limiting valve 62 and a combined pressure raising and shut-off valve 63. The flow limiting valve 62 is urged towards an open position by fuel pressure in the passage 60 and is biassed against this pressure by a spring 64. The valve 62 can also be urged shut by a servo pressure in a chamber 65 this servo pressure being regulated by a pilot valve 66 which is in series between a high pressure line 67 from the filter unit 24 and the low pressure return passage 55. The pilot valve 66 comprises two axially aligned nozzles 68, 69 and a control element 70 movable to increase the flow area of one of the nozzles and simultaneously to decrease the flow area of the other nozzle, so that pressure between the nozzles 68, 69 is dependent on the position of the element 70. The element 70 is positioned by a torque motor responsive to electrical signals on lines 71, 72 from the respective computers 13, 14. Signals on the lines 71, 72 are generated in response to an excessive speed or excessive temperature condition in the engine 10 and operate the pilot valve 66 to increase the pressure in chamber 65 and move a control element 73 of the valve 62 downwardly to reduce fuel flow to the passage 61. A limit stop 74 on the control element 73 allows a bypass orifice 75 to remain open in the most downward position of the control element 73, so that the valve 62 cannot shut-off fuel flow entirely.

Fuel passes from the valves 62 to the valve 63 through a passage 80. The valve 63 has a control element 81 which is urged open by the pressure in the passage 80 and is biassed against this pressure by springs 82 and by the pressure in a chamber 83. The pressure in chamber 83 is regulated by a pilot valve in the form of a nozzle 84 which is in series with a flow restrictor 85 between the high pressure line 67 and the low pressure return passage 55. A control element 86 is movable between a position in which it shuts the nozzle 84 and a position (shown) in which it shuts an aligned nozzle 87, the nozzle 87 providing a further pilot valve which controls the servo pressure in the chamber 43 (Figure 2) by way of the line 54. In the clockwise position (shown) of the control element 86 the pressure in chamber 83 is low and the control element 81 of the valve 63 can be lifted against the springs 82 by the fuel pressure in the passage 80. In this condition of operation the valve 63 acts as a pressure raising valve which ensures that fuel does not flow to the engine 10 until the pressure in the system as a whole is sufficiently high as to cause the various servo systems to be in their proper operating states. Additionally the nozzle 87 is shut and the pressure in the chamber 43 (Figure 2) is effectively pump delivery pressure, so that the spill valve 40 responds to the pressure difference across the series arrangement of the metering valve 21 and the limiting valve 62.

In the anti-clockwise position of the control element 86 the nozzle 84 is shut and the pressure in chamber 83 is high, urging the control element 81 downwardly to shut the valve 63. Consequent opening of the nozzle 87 releases the pressure in chamber 43 and as described above allows the spill valve 40 to become fully open.

On starting the engine 10 the motor 88 is energised to set the element 86 to its clockwise position, opening nozzle 84 and shutting nozzle 87. Release of the pressure in chamber 83 allows element 81 to lift in response to an increase in pressure in the passage 80. Increase of the servo pressure in line 54 shuts the spill valve 40 causing the system pressure, including the pressure in passage 80, to rise and open the valve 21.

The control element 86 is coupled to the armature of a two-state torque motor 88 of a type available from Hydraulic Servo Controls Corporation. The motor 88 has coils 91 which are responsive to electrical signals on lines 89, 90 respectively from the computers 13, 14 respectively, the polarity of the signals on each line defining the direction of operation of the control element 86. Normally only one of the computers 13, 14 is in operation, it being arranged that in the event of malfunction of one of the computers control of the system is transferred to the other computer. The torque motor 88 includes a double coil arrangement 91 which is energisable by a signal on a line 92 to shut the nozzle 84 and hence to cause the valve 63 to shut off fuel flow. Since any signal on the lines 89, 90 will be present on only one of these lines, a signal on the line 92 will override any existing operating state of the torque motor to effect fuel flow shut-off. The signal on line 92 is derived from a manually operable override switch 93 (Figure 1). Operation of the valve 63 to its shut position operates a microswitch 94 which provides signals to the computers 13, 14 and to an indicator device 95 (Figure 1).

The torque motor 88 includes permanent magnets with which the currents in the lines 89, 90 and 92 co-operate to move the control element 86 against biassing springs (not shown). In the present invention the rates of these biassing springs are reduced so that in both operating states of the motor 88 the permanent magnets overcome the spring bias and retain the motor armature and the control element 86 in the last operating position to which it was energised, even though energising current is subsequently removed from the one of the lines 89, 90 or 92 to which it was applied. The motor 88 thus includes latching means which render it a bistable device for maintaining the servo pressures controlled by the valve nozzles 84, 87 at levels to which they were last set by operation of the motor 88.

A fuel pressure line 100 to the nozzle valve 26 is provided with a pressure regulating valve 101 which has a plunger 102 responsive to the pressure in line 100 and biassed against this pressure by a spring 103. The arrangement is such that an increase in the pressure in line 100 moves the plunger 102 to reduce flow through an orifice 104, the orifice 104 being in series with the restrictor 25. The valve 101 thus tends to maintain the pressure in line 100 substantially constant. The pressure in line 100 is also applied to a port 106 in the metering valve sleeve 36 to bias the control member 22 towards a shut position.

In the detailed representation of the metering device 21 shown in Figure 4 parts corresponding to those shown in Figure 2 have been assigned identical reference numerals. The metering valve control member 22 includes a piston portion 110 which is responsive to the servo pressure in the chamber 23 and is slidable within the sleeve 36 which is itself axially slidable within a fixed part 111 of the system. A peg 112 prevents rotation of the sleeve 36 relative to the part 111. At its upper end the sleeve 36 threadedly engages the adjusting plug 39, the latter being rotatable within the part 111 but being restrained by suitable means against axial movement relative thereto. Rotation of the plug 39 thus effects axial adjustment of the sleeve 36 within the part 111. An adjustable maximum fuel stop 113 is carried in the plug 39 and an adjustable minimum fuel stop 114 is supported on the part 111.

The inlet port 37 has an exponential profile. Such a profile is described in US—A—4,471,809 and US—A—4,513,782. As is known in the art the flow area of a variable orifice, one of whose members has an exponential profile, varies exponentially with relative movement between the control member and a port. In consequence, movement of the control member by unit distance from an initial position produces the same percentage change in metered flow for all initial positions. Unit distance of movement of the control member relative to the port thereby results in larger flow changes when the metered flow is initially high than when it is initially low. An exponential profile thus provides a rapid response at high flows and high metering accuracy at low flows. Likewise, the exponential profile has the effect that axial movement of the sleeve 36 for specific gravity compensation results in a constant percentage adjustment of the fuel flow, for each position of the control member 22, over the whole of the metering range.

Since mass flow through the metering orifice varies as $\sqrt{\text{specific gravity}}$, compensation for fuels having specific gravities of between 0.726 and 0.836 at 20°C can be effected by a total movement of the sleeve 36 of 0.178mm. The inter engaged threads of the sleeve 36 and plug 39 have a pitch of 0.635mm so that the required range of axial movement of the sleeve 36 may be obtained by 101° rotation of the plug 39.

Additionally, as disclosed with reference to Figure 2, the valve 40 which controls pressure drop across the metering valve 21 is responsive to fuel temperature so that the pressure drop is increased with increasing temperature. This temperature adjustment is required because increasing fuel temperature results in lower density. Moreover, a fuel having a lower density at a given temperature (standard density) will require a larger correction of pressure drop with temperature than a fuel having a high standard density. Thus without the metering adjustment provided by the present invention fuels of lower standard densities would require much increased pressure drops at high temperatures to maintain the required engine input in J/sec.

## Claims

1. A device (21) for metering liquid fuel to a gas turbine engine (10), comprising a housing (111) having inlet (37) and outlet (38) ports, a control member (22) movable in response to a servo pressure, for regulating flow through one of said ports (37), and means (29) for regulating said servo pressure in accordance with the magnitude of an electrical control signal, said housing (111) including a sleeve (36) which is axially movable to vary the position of said one port (37) in accordance with the density of said fuel, characterised in that said sleeve (36) threadedly engages a part (39) which is rotatable relative to said housing (111) but which is restrained against axial movement relative thereto.

2. A device as claimed in Claim 1 in which said servo pressure acts between said housing (111) and said control member (22).

3. A device as claimed in Claim 2 in which said part (39) includes an axially adjustable stop (113) engageable by said control member (22) to limit movement thereof in one direction.

4. A device as claimed in Claim 3 which includes a further axially adjustable stop (114) mounted on said housing (111) and engageable by said control member (22) to limit movement thereof in a second direction.

## Patentansprüche

1. Vorrichtung (21) zum Dosieren von flüssigem Brennstoff in ein Gasturbinentriebwerk (10), umfassend ein Gehäuse (111) mit Einlaß- (37) und Auslaßöffnungen (38), einem abhängig von einem Servodruck bewegbaren Steuerglied (22) zum Regeln des Stroms durch eine der Öffnungen (37), und Einrichtungen (29) zum Regeln des Servodrucks entsprechend der Größe eines elektrischen Steuersignals, wobei das Gehäuse (111) eine Hülse (36) umfaßt, die axial bewegbar ist, um die Stellung der einen Öffnung (37) entsprechend der Dichte des Brennstoffs zu variieren, dadurch gekennzeichnet, daß die Hülse (36) über ein Gewinde in ein Teil (39) eingreift, das relativ zum Gehäuse (111) drehbar, aber relativ zu diesem in bezug auf eine axiale Bewegung festgehalten ist.

2. Vorrichtung nach Anspruch 1, in welcher der Servodruck zwischen dem Gehäuse (111) und dem Steuerglied (22) wirkt.

3. Vorrichtung nach Anspruch 2, in welcher das Teil (39) einen axial einstellbaren Anschlag (113) umfaßt, der von dem Steuerglied (22) erfaßbar ist, um dessen Bewegung in eine Richtung zu begrenzen.

4. Vorrichtung nach Anspruch 3, welche einen weiteren axial einstellbaren Anschlag (114) umfaßt, der an dem Gehäuse (111) angebracht und von dem Steuerglied (22) erfaßbar ist, um dessen Bewegung in einer zweiten Richtung zu begrenzen.

**Revendications**

1. Dispositif (21) pour doser l'alimentation en carburant liquide d'un moteur à turbine à gaz (10), comprenant un carter (111) possédant des orifices d'entrée (37) et de sortie (38), un élément de commande (22) déplaçable en réponse à une pression de commande, pour réguler l'écoulement à travers un des orifices d'entrée (37), et un moyen (29) pour réguler la pression de commande suivant l'amplitude d'un signal électrique de commande, le carter (111) comprenant un manchon (36) qui est axialement déplaçable pour faire varier la position de l'orifice précité (37) en fonction de la densité du carburant, caractérisé en ce que le manchon (36) comporte une liaison par vissage avec une pièce (39) qui est rotative par rapport au carter (111), mais bloquée en déplacement axial par rapport à ce dernier.

2. Dispositif selon la revendication 1, dans lequel la pression de commande agit entre le carter (111) et l'élément de commande (22).

3. Dispositif selon la revendication 2, dans lequel la pièce (39) comprend une butée axialement réglable (113) contre laquelle peut s'appliquer l'élément de commande (22) pour limiter le déplacement de ce dernier dans une première direction.

4. Dispositif selon la revendication 3, comprenant une autre butée axialement réglable (114), monté sur le carter (111) et contre laquelle peut s'appliquer l'élément de commande (22) pour limiter le déplacement de ce dernier dans une deuxième direction.

FIG.1.

FIG.2.

FIG.3.

FIG. 4.

4